# EUROPEAN PATENT SPECIFICATION

(11) **EP 1 912 211 B1**
(45) Date of publication and mention of the grant of the patent: **30.12.2009**
(21) Application number: 06782110.8
(22) Date of filing: 01.08.2006
(51) Int. Cl.: G11B 7/005, G11B 20/10

(54) **METHOD FOR REPRODUCING OPTICAL DISC SIGNAL, AND OPTICAL DISC DEVICE**
VERFAHREN ZUR WIEDERGABE EINES OPTISCHEN DATENTRÄGERSIGNALS UND OPTISCHE DATENTRÄGEREINRICHTUNG
PROCÉDÉ DE REPRODUCTION DE SIGNAL DE DISQUE OPTIQUE ET DISPOSITIF DE DISQUE OPTIQUE

(30) Priority: 01.08.2005 JP 2005222861
(43) Date of publication of application: 16.04.2008
(73) Proprietor: NEC Corporation, Minato-ku Tokyo 108-8001 (JP)
(72) Inventor: IWANAGA, Toshiaki, c/o NEC CORPORATION, Tokyo 108-8001 (JP)
(74) Representative: Glawe, Delfs, Moll
(86) International application number: PCT/JP2006/315233
(87) International publication number: WO 2007/015492

(56) References cited:
- EP-A- 0 800 163
- JP-A- 11 306 680
- JP-A- 62 204 433

## Description

### Technical Field

The present invention relates to an optical disc drive which reproduces information from an optical disc including location information configured by a wobbled groove, and a signal reproduction method for the optical disc drive.

### Background Art

Optical discs which are now commonly used employ a method for detecting signals by reading a laser beam modulated and reflected on a recording surface of an optical disc. In optical discs of a read-only type, read signals are extracted by utilizing variation in the amount of light reflected by pre-pits which are formed in advance in the recording surface of the optical disc. For optical discs of a write-once type, signals are reproduced by utilizing variation in the amount of reflected light, which is caused by phase change of micro-pits or recorded marks, which are formed by high-power laser irradiation. For phase change optical discs which are of a rewritable type, signals are reproduced by taking advantage of variation in the amount of reflected light which is caused by a phase change of recorded marks. The write-once type and the rewritable type may be collectively referred to as a recordable type in some cases.

As a type of optical disc which follows the principles as described above, DVD (Digital Versatile Disc) has become prevailing widely. In a rewritable DVD, grooves are spirally carved in the recording surface of the disc and serve as recording tracks for recording information patterns by use of recorded marks. Reflected and diffracted light is generated by the phase change generated between the grooves and lands which are formed between the grooves, and is utilized for a tracking control. Accordingly, there are two types of standardized and commercialized schemes, i.e., a groove recording scheme in which recording and reproducing are carried out by utilizing only the grooves as recording tracks, and a land/groove recording scheme in which both the lands and grooves are used as recording tracks.

DVD-R and DVD+R belonging to the write-once type as well as DVD-RW and DVD+RW belonging to the rewritable type utilize the groove recording scheme. On the other hand, only a DVD-RAM utilizes the land/groove recording scheme.
Grooves used in both the groove recording scheme and land/groove recording scheme modulate a carrier signal of a sine wave, for example, by address information etc. so that every groove slightly wobbles (or meanders) in relation to the track width. These grooves are therefore referred to as wobbled grooves. Lands and grooves are sometimes referred to as convex and concave portions, respectively, or inter groove and groove portions as well.

An optical disc drive for a DVD performs focus control so that an optical beam emitted from an optical head is converged on a groove (or land) corresponding to a recording track, and at the same time, performs the tracking control by using reflected and diffracted light as described above. The rotational speed of optical discs is controlled so that a linear speed at which recording tracks are scanned with the optical beam assumes a constant To facilitate such a rotation control, carrier signals reproduced from wobbled grooves are used. Since the wobbled grooves each meander at a constant spatial frequency, the linear speed can be maintained constant by controlling the rotational speed so that reproduced carrier signals have a constant frequency- As far as the linear speed is maintained constant, information patterns which are recorded in synchrony with a recording clock (channel) maintained at a constant frequency is formed as recorded marks having a constant linear density.

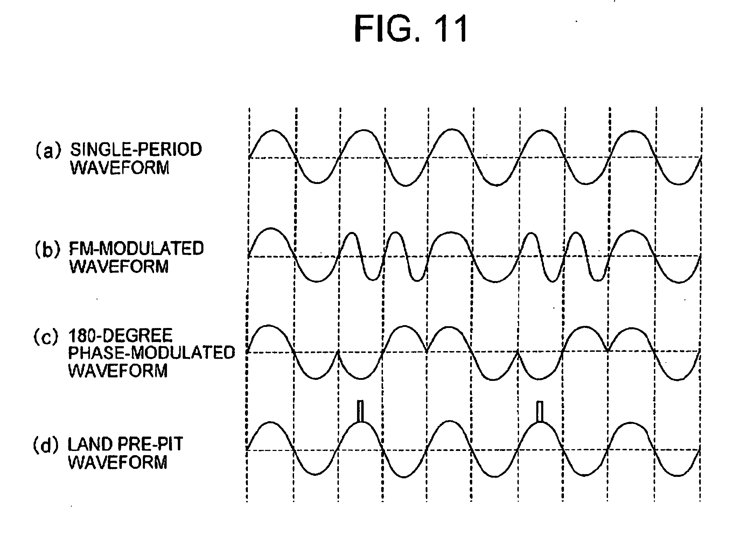

FIG. 11 schematically shows examples of read signal waveforms of address information for a variety of optical discs. A waveform (a) indicates an example of sine wave wobble signal of a single period, which is used for DVD-RAM and includes a mere carrier signal without address information. Digital signals including track addresses and sector addresses configuring address information as well as synchronization signals are embossed as pre-pits, each of which is formed at the head of every 2048 byte sector. Wobbled grooves are formed in a predetermined single period while avoiding the embossed parts. Another waveform (b) is an example of an FM modulated wave which expresses address information by using a basic carrier frequency and a frequency double the basic carrier frequency. The waveform (b) is formed by subjecting a frequency of a wobbled groove to digital FM modulation.

On the other hand, in case of a DVD R/DVD-RW, digital information including the address information is embossed as pre-pits on the lands separately from that on the wobbled grooves. Therefore, the digital information is read as a pre-pit signal which is superimposed as a high-frequency pulse signal on a carrier signal carried on a sine wave, as another waveform (d) indicates. In case of recording data at a particular address on a disc, location information of a pre-pit is decoded to control a record starting position. Address information indicating a position on a disc can be expressed in a method of modulating a phase of a wobbled groove as in the case ofDVD+R/DVD+RW indicated by another waveform (c), in addition to the method of expressing address information by using presence or absence of a pre-pit or a number of pulses, as in the case of DVD-R/DVD-RW. In case of DVD+R/DVD+RW, a sine wave having a phase shifted by 180 degrees from a carrier signal is locally inserted in the carrier signal, to generate a signal indicating digital information. In accordance with the generated signal, wobbled grooves are formed in advance. The address information can be obtained by demodulating the wobble signals read by an optical head.

As a next generation standard for a large volume DVD, an HD DVD which employs a blue ray laser has been standardized. As for the recording data, principal data (Main data) using sectors each having 2,048 bytes is added with data ID (Data ID) of 4 bytes, IED of 2 bytes, RSV of 6 bytes, and EDC of 4 bytes to attain total of 2,064 bytes, which are scrambled to configure a scrambled frame (Scrambled frame). With respect to the structure described above, the specification same as that of DVD is used so that the format has excellent compatibility with DVD. In case of a DVD, PI parity and PO parity are added to 16 scrambled frames to configure an ECC block. On the other hand, in case of an HD DVD, PI parity and PO parity are added to 32 scrambled frames to configure an ECC block. For every 91 bytes in the PI parity direction, a synchronization signal SYNC of 2 bytes is inserted to configure a synchronization frame of 93 bytes. A "Data field" of 77,376 bytes is comprised of 832 sync frames corresponding to 32 physical sectors. The data field is added with 1 sync flame to configure a data segment of 833 sync frames. The added 1 sync frame is comprised of a postamble field of 2 bytes, a reserve field of 4 bytes, a buffer field of 16 bytes, and a VFO field of 71 bytes.

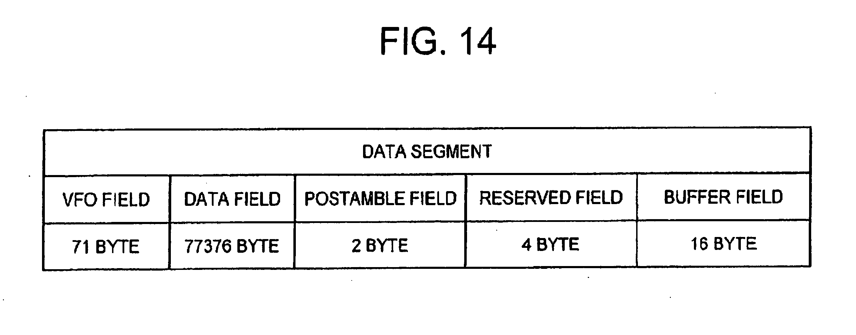

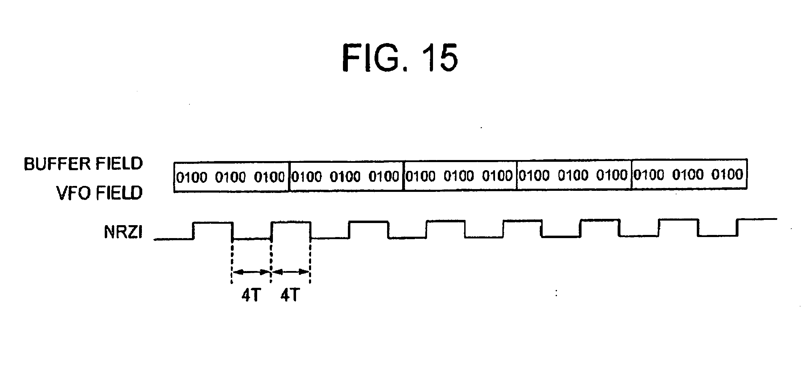

In case of an HD DVD-RIRW, the data segment shown in FIG. 14 is a minimum unit for recording. The HD DVD-R/RW is configured as follows. Recording is started from a VFO field. During reproduction thereof, a 4T period obtained from the VFO field is repeated to pull-in the PLL and lock the same. A reserve field of 4 bytes defines all the bits at "0" bits, and that both of a buffer field of 16 bytes and the VFO field of 71 bytes are "0100 0100 0100". Therefore, in NRZI recording, 4T period of "1" and 4T period of "0" are repeated continuously throughout the duration of total 87 bytes, as shown in FIG.15. On the other hand, at an end of the recording, the recording is carried out up to a buffer field, and a guard field of 24 bytes is thereafter added, to end the recording. In the guard field, "0100 0100 0100" is recorded as in the VFO field and a buffer field

A "Data field" follows the VFO field In particular, a synchronization signal SYNC pattern which is referred to as SY0 is assigned to the head of each "Scrambled frame". Therefore, if SY0 can be detected successive to the VFO field, the SY0 can be recognized to be the head of a first sector, i.e., the head of an ECC block. The term of data field in the present specification is intended to mean a recording field including the VFO field, in particular, as far as HD DVD is concerned.

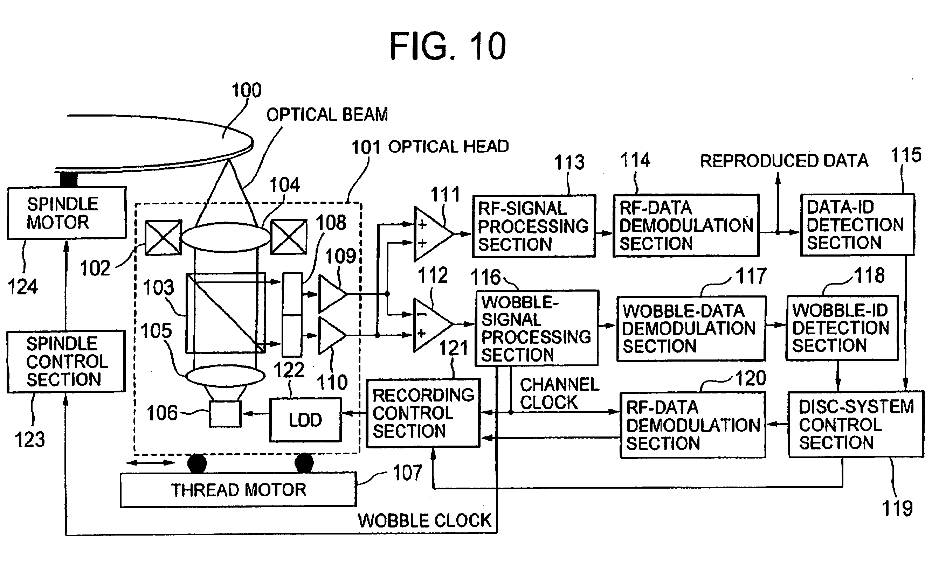

Hereinafter, a conventional recording/reproducing method and functions of respective blocks in an optical disc drive will be described with reference to a block diagram of the optical disc drive shown in FIG. 10. An optical beam emitted from a semiconductor laser (hereinafter LD) 106 within an optical head 101 is converged on the recording surface of an optical disc 100. Reflected light of the optical beam is branched by a beam splitter 103, and is received by a half-divided photodetector 108 oriented in correspondence with a radial direction perpendicular to recording tracks. An electric current output obtained from each half of the photodetector is converted into a voltage output by a corresponding I-V amplifier 109, 110. A signal which varies in accordance with the wobble of grooves is obtained by subjecting an output signal from an I-V amplifier 109,110 to a reduction calculation using a differential amplifier 112. At this stage, a variation in the amount of reflected light from recorded marks is usually referred to as an information read signal, and is obtained by a gumming amplifier 111 in case of the configuration as described above. The information read signal from a recorded mark is sometimes referred to as an RF signal. Recitation to the servo processing as a control for positioning the optical beam in relation to the disc recording surface and the recording track will be omitted from the description.

For example, a wobble-signal processing section 116 is comprised of: a band-pass-filter which has a pass band near a wobble frequency; a PLL (Phase Locked Loop) synchronization circuit for obtaining a wobble clock in synchrony with a wobble clock; a sampling circuit which samples an output from the band-pass-filter in synchrony with the wobble signal; and a synchronization circuit that binarizes and synchronizes an output from the sampling circuit. The wobble-signal processing section 1.16 outputs a channel clock for recording (or recording clock), a wobble clock, and binary synchronized data of wobble. A wobble-data demodulation section 117 decodes the binary synchronized data of wobble in accordance with modulation rules. At this stage, a synchronization signal pattern of the wobble signal is also decoded by, for example, the technique of pattern matching. A wobble-ID detection section 118 detects and outputs address information corresponding to a physical sector, such as a sector number or track address embedded in the wobble signal.

The wobble-signal processing section 116 functions to control the rotational speed of a spindle by using a spindle control section 123, so that the frequency of the wobble clock obtained by the PLL synchronization circuit assumes a constant. As a result of this, the scanning speed of the optical beam is maintained at a substantially constant linear speed. A disc-system control section 119 generates an information pattern on the basis of information data which is recorded in synchrony with the recording clock maintained at a constant frequency based on the address information obtained from the wobble-data demodulation section 117. The disc-system control section 119 further allows a recording control section 121 to modulate the optical beam intensity by use of an LDD (Laser Diode Driver) 122, to thereby form the information pattern as a recorded mark on the optical disc at a constant linear density. The disc-system control section 119 receives input information data recorded by an interface section not shown, which exchanges the information data or the like with an upper-level host, the descriptions of which will be omitted herein. The recording clock which is expressed as a channel clock in the figure is generated by multiplying the wobble clock. Since the information pattern can be recorded following to a linear speed detected by the wobble frequency, high positioning accuracy can be obtained In this manner, required accuracy of positions where information patterns are formed can be reduced to be equal to or lower than a phase variation amount caused by deviation of track of the optical disc. Naturally, the positioning accuracy influences the accuracy of positioning the record starting position in relation to a reference position of the wobbled groove.

The RF signal as a read signal of a recorded mark is a summation of amounts of reflected light and is therefore output from the summing amplifier 111. This RF signal is subjected to an alternaring-current coupling using an element, not shown, such as a capacitor, and is transferred to the RF-signal processing section 113 disposed at a successive stage. The RF-signal processing section 113 is comprised of anAGC (Automatic Gain Control) circuit, a waveform equalizer having a predetermined frequency characteristic, a PLL circuit for obtaining a channel clock for reproduction, and a binarizing circuit The RF-signal processing section 113 outputs a reproduced signal as binary clock-synchronized data. An RF-data demodulation section 114 decodes the binary reproduced signal by use of a decoding circuit, and outputs the decoded binary reproduced signal as reproduced data to the host side not shown. In parallel, the signal output from the RF-data demodulation section 114 is input to a DATA-ID detection section 115 and is used to obtain address information such as a sector number embedded in the recording data.

The RF signal, which is an output from the I-V amplifiers and the summing amplifier as described above, is subjected to the alternating-current coupling, because the RF signal affects the dynamic range of the AGC circuit and the waveform equalizer which are provided at the successive stage if the RF signal maintains a DC level. In addition, a band up to several kHz within the band of the RF signal is a servo signal band and is unnecessary. Therefore, the band up to the several kHz is usually subjected to the alternating-current coupling, in order to cut off an excessive variation in DC level within a low band Further, the I-V amplifiers are provided with a circuit for switching I-V gains by a recording gate in order to avoid saturation of an output amplitude in accordance with increase in the amount of received light during the recording.

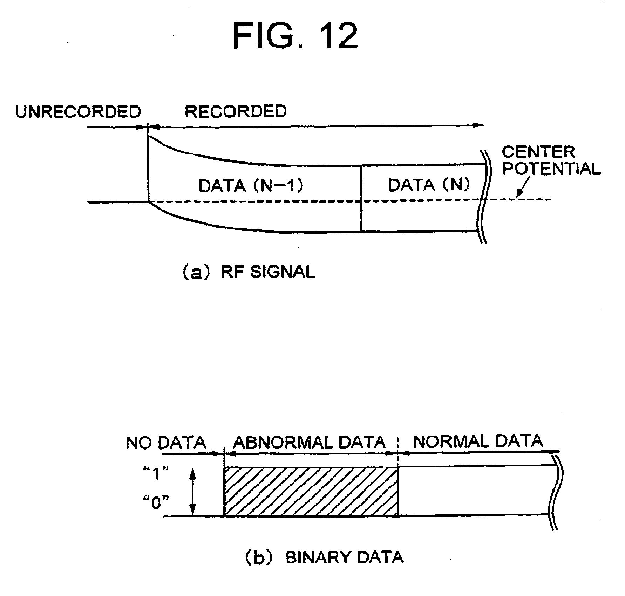

In case of a DVD, one ECC block is a minimum unit for recording at a target address N at which the recording is started. Accordingly, information patterns are recorded block by block of the ECC block (consisting of 32 Kbytes in case of the DVD) on unrecorded recording tracks. To read the data of at least one ECC block successive to an unrecorded field, the RF signal output from the I-V amplifiers and summing amplifier is subjected to an AGrC processing and a waveform processing after the alternating-current coupling. Therefore, as shown in FIG. 12(a), an RF signal envelope causes a great variation in the DC level, in a transition field from an unrecorded state to a recorded state. Document JP-2004326875 (RICOH, published 18.11.2004) discloses a DVD signal reproducing method for reproducing information data wherein the address is embedded in the wobble signal, wherein a DC level correction on an information read signal is performed upon reproducing data from the recorded data field, wherein binarizing and reproducing the information read signal that is subjected to the DC level correction is performed and wherein the timing of the synchronization is performed, but wherein this timing is not used for the DC level correction on an information read signal. Besides, this document addresses the problem of the great variation in the DC level in a transition field from an unrecorded state to a recording state and proposes a solution directed to an improved reproduction of the wobble read signal and not of the information read signal. This variation in the DC level due to the alternating-current coupling occurs unavoidably, and influence thereof still remains or increases in output signals from the AGC circuit and the waveform equalizer provided at the successive stage. Therefore, there is a drawback that the binarizing circuit cannot perform accurate binarizing before a predetermined time constant (e.g., 1 msec if a cutoff frequency of the alternating-current coupling amplifier is 1 kHz) from a start point of the RF signal, as indicated by hatching in FIG. 12(b). Therefore, in case of a DVD+RLRW, an ECC block at an address N-1 which is just previous to a target address N inevitably needs to be recorded as a dummy. On the other hand, in case of a DVD-R/RW, for a linking field as a successively written field, an ECC block at an address N -1 which is just previous to a target address N needs to be recorded first Thus, an optical disc system which inquires a dummy recording causes a wasteful capacity loss of the recording tracks, and requires two ECC blocks to record one ECC block as a minimum unit, resulting in a problem which impairs the merits of a larger capacity.

Originally, the DVD-R/RW and DVD+R/RW are disc systems to be used in presupposing a sequential file which is not recorded by random access. Therefore, problems do not frequently occur in a field where an unrecorded state shifts to a recorded state. However, during the use of them with computers, a problem occurs in that the address management of a target is complicated in order to make matching with file systems. In addition, neither DVD-RIRW nor DVD+R/RW has a format which includes a field for pull-in of the PLL even if there is no variation in the DC level. Therefore, the DVD-R/RW and DVD+R/RW are systems incapable of reproducing the recorded data from the head of the data, and are disc systems which have a lower random accessibility.

On the other hand, the HD DVD-R/RW uses, as a minimum unit, a data segment including a VFO field for pull-in of the PLL, unlike the DVD systems. The VFO field also functions to link data segments. Therefore, the HD DVD-R/RW is a disc system which is more suitable for random accessing than the existing DVD. However, the influence by a variation in the DC level due to the alternating-current coupling cannot completely be eliminated in the field at the head of a recorded segment successive to an unrecorded segment, including a time constant required for the alternating-current coupling although 71 bytes are allocated for the VFO field

For example, in case of an HDDVD-RW of a 1X recording/reproducing scheme, the disc linear speed is 5.6 m/sec and the linear density is 0.13 µm/bit. Accordingly, the VFO field of 71. bytes has a time length of about 20 µsec. The VFO field also functions as a PLL pull-in field If pull-in is assumed to require 10 bytes or so for the PLL which is designed to allow high-speed pull-in, approximately 10 kHz is considered as an effective cut-off frequency. Therefore, neither the accurate binarizing nor the correct identification of a VFO field can be performed up to a predetermined time constant. As a result, no PLL lock can be achieved, and there still remains a problem that a head data segment field cannot be reproduced

With respect to the time constant concerning the alternating-current coupling, there is a limit to reduction of the time constant for the alternating-current coupling in accordance with higher multiplication of a speed. This time constant needs to be more reduced as the speed is more multiplied Nonetheless, setting becomes more difficult in actual as the speed is more multiplied. This is because, if the time constant for the alternating-current coupling is simply reduced, the lower band-cut-off frequency rises so that a lower band component of the RF signal is cut off. Consequently, waveform distortion or so-called sag easily occurs and thereby increases reproduced data errors.

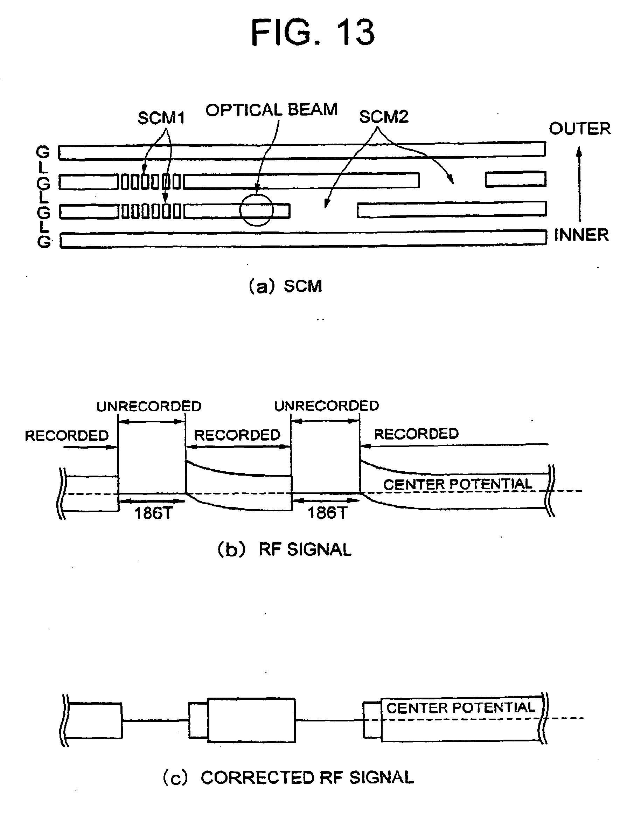

Meanwhile, an HD DVD-RW adopts a configuration in which radial directions are divided into a plurality of zones within an intra-zone CLV. At each boundary between adjacent zones, there are embedded repeated 8T recorded marks (T is a channel clock period) as SCM1 and a mirror surface for detecting a radial tilt as SCM2, which are collectively called SCMs (Servo Calibration Marks) for servo signal correction. The SCMs are formed by the technique of interrupting a wobbled groove halfway at a timing synchronizes with the wobbled groove. The length of SCMs including both the SCM1 and SCM2 is 186T (T is a channel clock period)- A track field including the SCMs is not defined so as to record information data. However, it is considered that such a track field can be used for a recording check for an optical disc drive and for adjustment of recording power. In this case, information patterns are recorded while avoiding SCMs. The reason that the recording is thus carried out while avoiding SCMs is as follows. If recording is carried out so as to include SCMs, the reflectivity at the area of SCMs is higher than that at the surrounding area thereof. Therefore, as shown in FIG. 13(b), the amplitude greatly varies locally, or the SCM1 causes distortion due to a waveform interference. At this stage, if data is read from a recording track on which a groove including an SCM or a land adjacent to then SCM, influence from a variation in the DC level due to the alternating-current coupling is observed, as shown in FIGS. 12 and 13(b). Thus, there is a drawback that information cannot be reproduced accurately. Consequently, a field which can be used for adjusting the optical disc drive is limited within a track field including an SCM.

### Disclosure of the Invention

The present invention has been made in view of the above problems, and it is an object of the present invention to provide a signal reproduction method and an optical disc drive which are capable of reproducing data at a higher speed with a higher reliability from an optical disc in which a recording tack having a recorded state successive to an unrecorded state, to thereby assist an increase of capacity of the optical disc with ease while using a simple structure.

The present invention provides a signal reproduction method for reproducing information data from an optical disc having location information configured by a wobbled groove, the method including the steps of generating a synchronization signal from a wobble read signal read from the optical disc; performing a DC level correction on an information read signal read from a vicinity of a head of a recorded data field which is successive to an unrecorded data field, by using a timing of the synchronization signal, upon reproducing data from the recorded data field; and binarizing and reproducing the information read signal that is subjected to the DC level correction.

The present invention provides an optical disc drive for reproducing information data from an optical disc which has location information configured by a wobbled groove and includes a recorded data field successive to an unrecorded data field, the optical disc drive including: means for generating a synchronization signal from a wobble read signal read from the optical disc; means for performing a DC level correction on an information read signal read from a vicinity of a head of at least the recorded data field, by using a timing of the synchronization signal; and means for binarizing and reproducing the information read signal that is subjected to the DC level correction.

Preferred embodiments of the method and the drive are as set out in the depending claims.

In the present invention, the term reciting "perform a DC level correction" means that the DC level of an RF signal envelope having a higher transient response due to an alternating-current coupling is temporarily fixed to, for example, a predetermined reference potential, to thereby suppress the transient response of the DC level, thereby achieving a state in which stable binarizing of the RF signal is performed with a higher reliability.

The signal reproduction method for an optical disc and the disc drive of the present invention are capable of solving the problem that a data identification error occurs at the head of an information read signal in a data field when data is reproduced from a recorded data field successive to an unrecorded data field with respect to an optical disc having location information configured by a wobbled groove, or when data is reproduced from a field successive to a field in which a wobbled groove is interrupted, from an optical disc provided with the field in which a wobbled groove is interrupted. Accordingly, recording/reproducing on the basis of ECC data unit can be realized with a higher reliability, whereby the reproducing or recording can be carried out by random access without providing a dummy data field. Therefore, a highly reliable optical disc system can be configured without impairing merits of a large-capacity optical disc.

### Brief Description of the Drawings

FIG. 1 is a block diagram showing an optical disc drive according to a first embodiment of the present invention;
FIG. 2 is a block diagram showing a part of RF-signal processing section shown in FIG. 1;
FIG. 3 is a block diagram showing an example of a DC-level correction circuit shown in FIG. 1;
FIG. 4 is a block diagram showing another example of the DC-level correction circuit;
FIG. 5 is a block diagram showing another example of the DC-level correction circuit;
FIG. 6 is a block diagram showing an example of an impedance switching circuit shown in FIG. 5;
FIG. 7(a) and FIG. 7(b) each are a diagram showing the recording state of data on an optical disc;
FIG. 8(a) and FIG. 8(b) each are a signal timing chart showing an effect of the present invention in a recordable DVD;
FIG. 9(a) and FIG. 9(b) each are a signal timing chart showing an effect of the present invention in an HD DVD-RIRW;
FIG. 10 is a block diagram showing an example of a conventional optical disc drive;
FIG. 11 is a timing chart showing read signals of address information for a variety of optical discs;
FIG. 12(a) and FIG. 12(b) each are a signal timing chart showing a conventional problem;
FIG. 13(a) is a schematic top plan view showing tracks of an optical disc having SCMs, FIG. 13(b) is a conventional signal timing chart obtained by the optical disc of FIG. 13(a), and FIG.13(c) is a signal timing chart obtained by the DC level correction according to the present invention;
FIG. 14 is a diagram showing a data segment configuration of an HD) DVD format;
FIG. 15 is a diagram showing an example of a data pattern in NR,ZI recording using an HD DVD format;
FIG. 16 is a diagram showing a SYNC pattern of a wobble signal; and
FIG. 17 is a timing chart showing a relationship between a synchronization signal pulse and an RF signal in an HD DVD format.

### Best Mode for Carrying Out the Invention

Hereinafter, embodiments of the present invention will be described with reference to the drawings. The embodiments will be described exemplifying an HDDVD-R/RW.

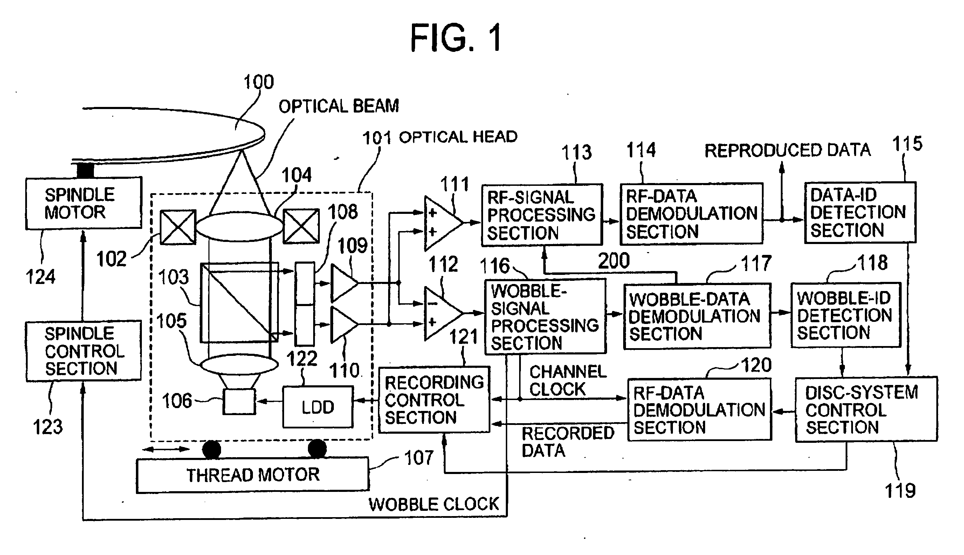

FIG. 1 is a block diagram showing an optical disc drive according to a first embodiment of the present invention. In this embodiment, an optical beam emitted from a semiconductor laser (hereinafter referred to as an LD) 106 within an optical head 101 is converged on an optical disc 100, as in the conventional optical disc drive. Reflected light therefrom is split by a beam splitter 103 and is received by a photodetector 108 divided into two halves in the radial direction of the disc. The electric current outputs each obtained from the photodetector 108 are respectively converted into voltage outputs by I-V amplifiers 109 and 110. A signal which varies in accordance with the wobble of grooves can be obtained by performing a subtraction in a differential amplifier 112. At this stage, a variation in the amount of reflected light from a recorded mark is usually referred to as an information read signal (or RF signal), which is obtained by a summing amplifier 111 in the present configuration. The RF signal is subjected to the altemating-cuirent coupling by using an element such as a capacitor C not shown and is transferred to an RF-signal processing section 113 provided at the successive stage. At this step, as described with reference to FIGS. 12(a) and 13(b), a DC level variation occurs as a transitional response at the head field of the RF signal. In the present embodiment, a signal in which the DC level has varied as shown in FIG. 12(a) or 13(b) is subjected to a DC level correction so that, for example, a stable RF signal as shown in FIG. 13(c) and an accurate data signal can be obtained

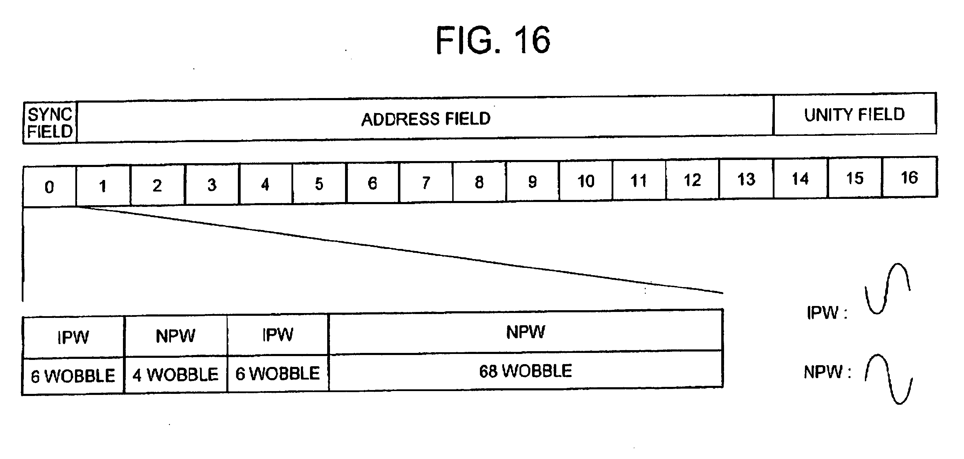

FIG. 16 shows a data format indicating a wobble signal in an HD DVD-R/RW. In case of the HD DVD-R/RW, wobble is formed so that one data segment is comprised of 17 WDUs (Wobble Data Units), and phase modulation is effected by NPW (Normal Phase Wobble) and IPW (Inverse Phase Wobble). 4 wobbles configure information of 1 bit The 17 WDUs are configured by one SYNC field, thirteen ADDRESS fields, and three UNITY fields arranged in this order from the head. A synchronization signal pattern is embedded in the SYNC field, and ID information such as a segment address and a track address is embedded in the ADDRESS fields. The UNITY fields are fields where a single-period wobble is formed.

By the phase modulation, a signal expressing digital information including an address is generated by locally inserting a sine wave, which has a phase different by 180 degrees from the phase of a carrier signal, into the carrier signal which consists of a sine wave, as has been described on the conventional technique with reference to FIG. 11(c). In accordance with the generated signal, wobbled grooves are formed in advance. HD DVD-R and DVD-RW differ from each other it the recording density/capacity, as well as in the recording format wherein the former adopts the groove recording scheme while the later adopts the land/groove recording scheme. Therefore, there is some difference with respect to the wobble format configuration. The partial difference affects only little on the present invention, and accordingly, descriptions will be made below assuming that both have a similar wobble format.

A wobble-signal processing section 116 is comprised of: a band-pass-filter which has a pass band near a wobble frequency; a PLL . (Phase Locked Loop) circuit for attaining a wobble lock synchronized with a wobble signal; a sampling circuit which samples an output from the band-pass-filter synchronized with the wobble signal; and a synchronization circuit which binarizes and synchronizes an output from the sampling circuit. The wobble-signal processing section 116 outputs a channel clock for recording, and binary synchronized data of the wobble clock and wobble. A wobble-data demodulation section 117 decodes the binary synchronized data of the wobble in accordance with modulation rules. At this stage, a synchronization signal pattern of the wobble signal is also decoded by, for example, the technique of pattern matching. A wobble-ID detection section 118 detects and outputs address information corresponding to a physical sector, such as a sector number or track address embedded in the wobble signal. An inhibited pattern which is determined by a wobble modulation technique is used as a synchronization signal pattern included in a SYNC field in the wobble format. Upon detecting the synchronization signal pattern, pattern matching is performed on the signal read out, to thereby output a synchronization signal pulse 200 from the wobble signal.

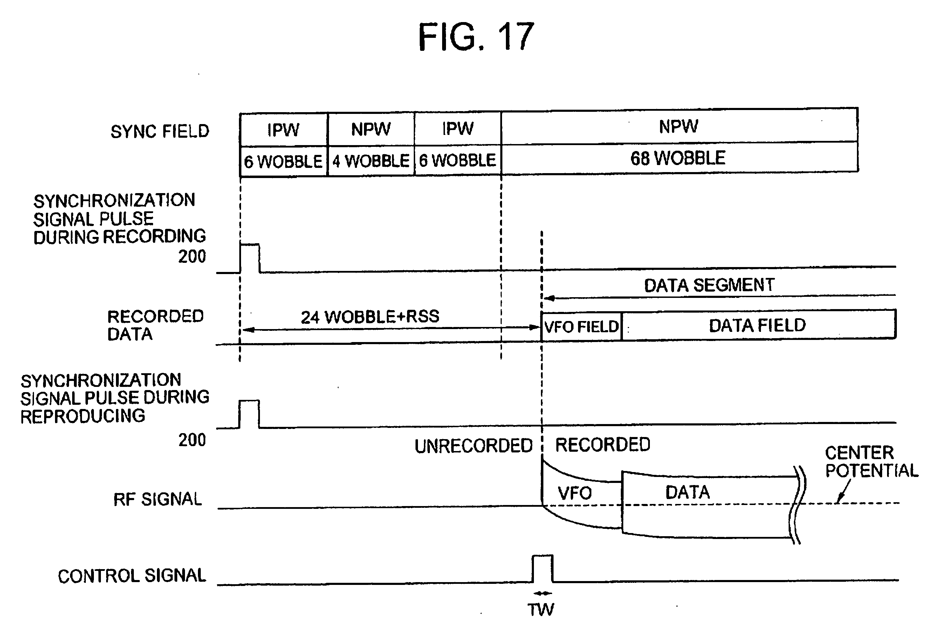

FIG. 17 shows an output timing of the synchronization signal pulse and the state of a relationship between the same and the DC level correction of the RF signal in the case of an HD DVD. In the HD DVD, the SYNC pattern is embedded in 6 wobbles, 4 wobbles, and 6 wobbles. The SYNC pattern in this wobble signal has a different number of wobbles so that the SYNC pattern can be easily distinguished from other wobble address information. Therefore, a bit pattern corresponding to the wobble pattern is prepared in advance. If a pattern corresponding to the bit pattern appears in the wobble signal, the corresponding pattern is determined as a SYNC pattern. Alternatively, if a specific number of bits matches therewith, these bits are determined as a SYNC pattern. By adopting this configuration, the SYNC signal can be detected at the trailing end of the SYNC signal. However, assuming a case where no SYNC pattern can be detected, an actual optical disc drive may adopt a configuration wherein a stable detection is performed by combining results of determination with respect to the continuity of SYNC patterns and the continuity of wobble addresses. In this case, the synchronization signal pulse can be detected at the head of the SYNC pattern. Accordingly, the synchronization signal pulse can be output at the head of the SYNC pattern The head timing of a VFO field can be calculated by shifting the timing of the synchronization signal pulse by 24 wobbles or by a period equivalent to a random bit shift (RBS) in addition to the 24 wobbles. Therefore, a control signal can be output with a time difference which takes into consideration a predetermined format time difference with respect to the head timing of the VFO field and/or the delay of a detection circuit, and which has a predetermined time width TW.

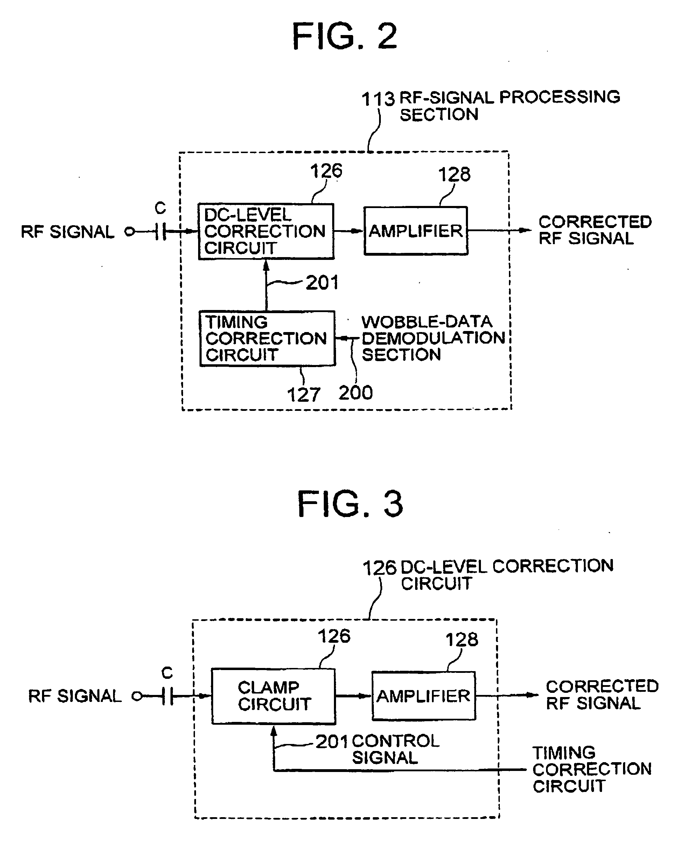

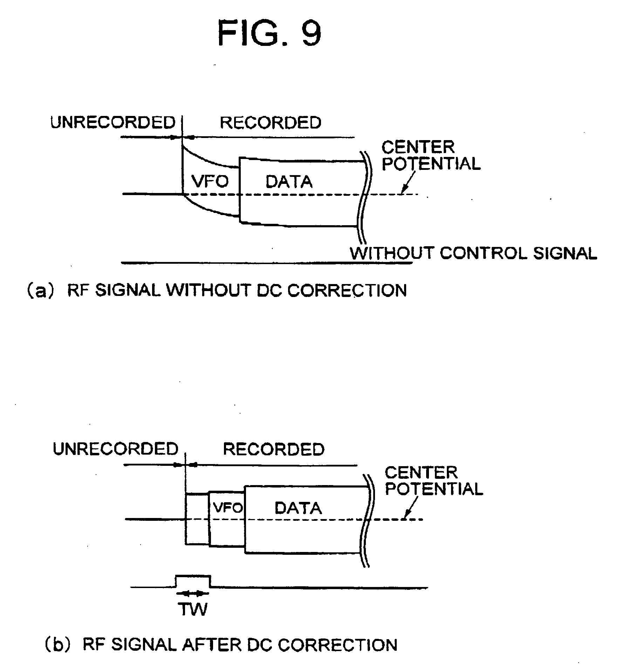

FIG. 2 shows the structure of a part of the RF-signal processing section 113, e.g., a circuit section for removing a variation in the DC level. This circuit section is comprised of a DC-level correction circuit 126, a timing correction circuit 127, and an amplifier 128. The timing correction circuit 127 generates a control signal 201 having a predetermined time width TW and a timing corrected in consideration of the format time difference with respect to the head of a data segment, i.e., the VFO field, and the delay of the detection circuit, based on the synchronization signal pulse 200 delivered from the wobble-data demodulation section 117. Using the control signal 201, the RF signal is subjected to a DC level correction to thereby obtain the RF signal as shown in FIG. 9. Accordingly, a variation caused by a transitional response in the RF signal is suppressed so that the DC level of the RF signal can be stabled

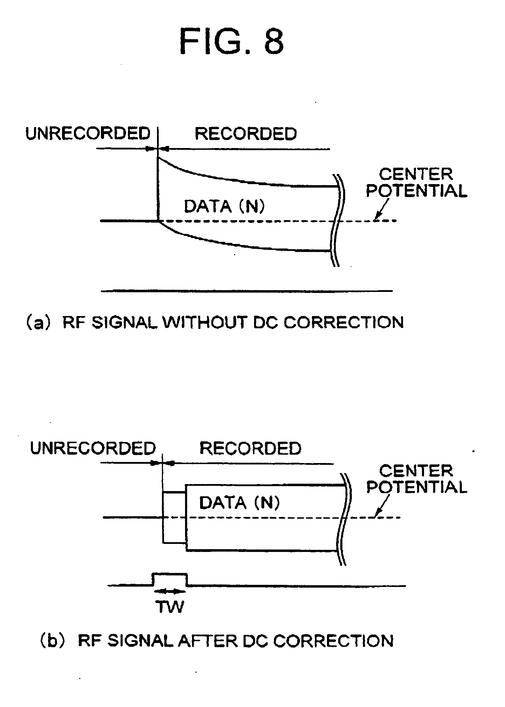

In setting of the predetermined time width TW of the control signal 201, there is no need of calibrating the RF signal in the range where the DC level does not vary as shown in FIGS. 8, 9, 12, and 13. This is because, if the DC level of the RF signal is forcibly corrected, a significant level of waveform deformation of the RF signal takes place. Consequently, the SN ratio is degraded if such a setting is made on the range which requires no setting. The control signal 201 generated by the timing correction circuit 127 can always be generated so long as the wobble signal is detected. However, the control signal 201 can be generated based on a supposition which takes into consideration the continuity of wobble addresses as a determination reference. The continuity is determined as follows. Wobble addresses are arranged in, for example, an incremental order from the inner circumferential side toward the outer circumferential side of the optical disc. Therefore, existence of the continuity can be determined if the addresses appear incrementally when the optical beam scans the optical disc from the inner circumferential side to the outer circumferential side.

Several types are available for the configuration of the DC-level correction circuit 126. FIG. 3 shows an example of the configuration of the DC-level correction circuit 126 used in the first embodiment of the present invention. As shown in the figure, the DC-level correction circuit 126 has a configuration in which the RF signal subjected to the alternating-current coupling using a capacitor C is allowed to pass through a clamp circuit for a predetermined time width based on the control signal 201 synchronized with the wobble. The term "clamp" is intended to mean that the DC level of the RF signal which causes a transitional response due to a high DC level resulting from the alternating-current coupling is fixed to a predetermined reference potential. As specific configurations, there are included: a circuit configuration which uses a control signal generated by a timing correction circuit on the basis of a synchronization signal pulse from a wobble signal, when clamping the DC level to the reference potential by using a diode, to thereby clump the DC level locally for the time width TW; and a circuit configuration which drains the electric charge in accordance with the time constant. By these specific configurations, a variation in the DC level can be restricted to thereby perform the DC level correction. It is to be noted that the capacitance C of the coupling capacitor as the clamping time constant, and the time width T'W are items to be adjusted

The amplifier 130 provided at the successive stage usually needs only to function as a buffer amplifier. Therefore, the amplification factor is an item to be adjusted. Further, the clamp circuit 129 need not always perform the DC level correction, and may perform the processing for the predetermined time width T'W based on the synchronization signal provided by the wobble signal. Although pedestal clamping is well known as a video processing technique, the pedestal clamping does not use a control signal for the clamping.

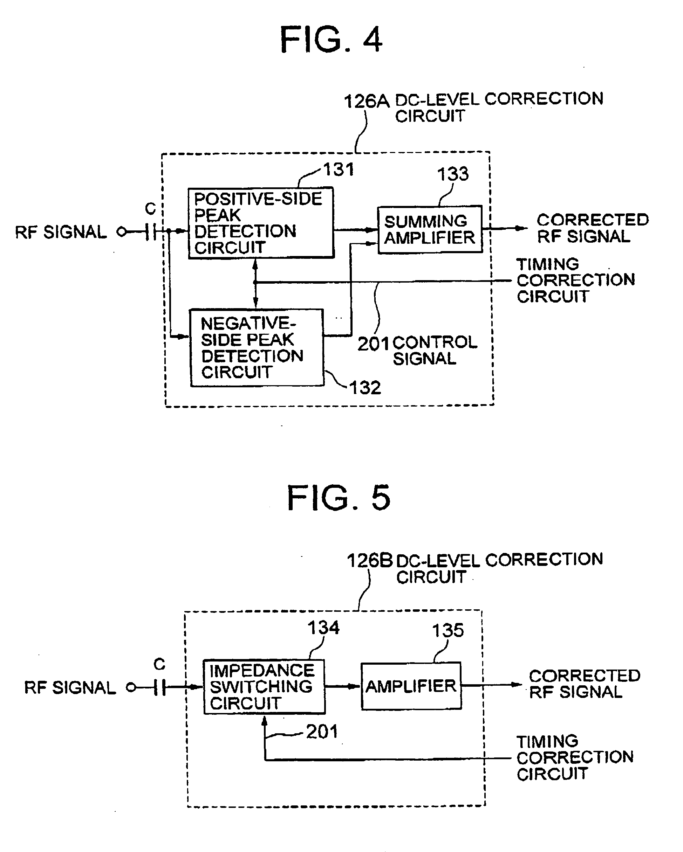

As another example of the DC-level correction circuit, a DC-level correction circuit 126A, as shown in FIG. 4 can be adopted. The DC-level correction circuit 126A achieves a function equivalent to a clamp circuit by performing a DC level adjustment with use of a summing amplifier 133. The summing amplifier 133 receives a positive-side peak signal of the RF signal, which is detected by a positive-side peak detection circuit 131, and also a negative-side peak as an inverted output, which is detected by a negative-side peak detection circuit 132. In this example, the DC level correction can always be performed at a head of a recorded field, and the processing can be performed only for a predetermined time width TW based on the synchronization signal from the wobble signal. Therefore, a time constant, an offset value, and the time width TW are items to be adjusted.

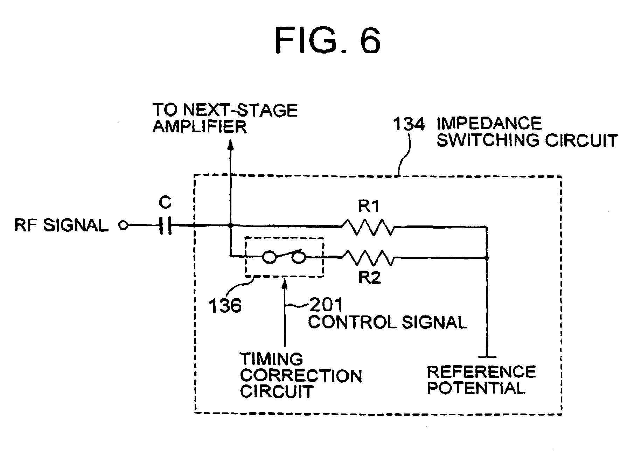

FIG. 5 shows another example of the DC-level correction circuit, e.g., a DC-level correction circuit 126B which performs the DC level correction by using switching of the impedance. The DC-level correction circuit 126B includes an impedance switching circuit 134 and an amplifier 135. FIG. 6 shows an exemplified concrete configuration of the impedance switching circuit 134. The impedance switching circuit 134 sets beforehand a resistor R2 so that the impedance can be lowered only in the vicinity of the transition field where an unrecorded field shifts to a recorded data field. The impedance switching circuit 134 also sets beforehand a time constant CR2 to be smaller than the time constant CR1. By using a control signal 201 generated by the timing correction circuit 127 on the basis of the synchronization signal pulse provided from the wobble signal, the impedance is switched locally for the time width TW by means of a changeover switch 136, to thereby drain the electric charge stored in the alternaring-current coupling capacitor C toward the reference potential. That is, the DC level correction is achieved by switching the discharge time constant Parameters such as the predetermined time width TW and the time constant CR should be optimized during a design process. The above example shows the impedance switching circuit 134 as a circuit of a single end type. However, a differential type can be adopted by preparing two impedance, switching circuits based on an inverted signal of the RF signal and by performing a differential amplification of the outputs from the two systems. In this case, there is attained an additional effect of reducing noise having an equal phase, such as circuit noise.

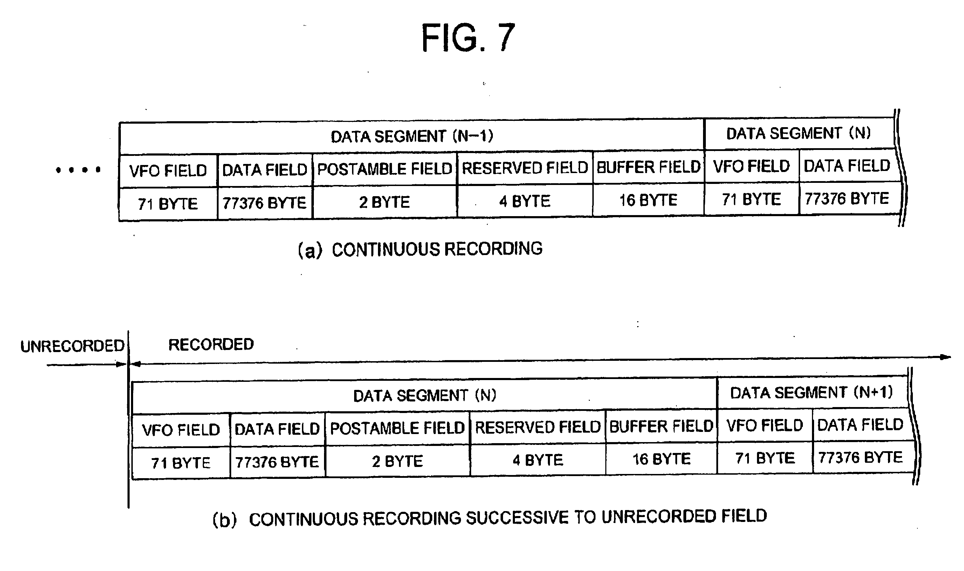

Though not shown in the drawings, a DC level correction technique may be used in which the time constant of the AGC circuit itself is switched by performing a timing correction based on the synchronization signal of the wobble signal, to thereby achieve the DC level correction. Thus, the DC level correction can be performed using the exemplified configurations as described above. A further description will be made of an example of the sequential timing which enables the DC level correction common to the techniques in the respective exemplified configurations. FIGS. 7 show states of data segment recording on an optical disc. FIG. 7(a) shows a recording state on the disc along with an exemplified format in case where the recording is continuously performed from a data segment address (N-1) to a data segment address N (where N is a positive integer). In this case, N is a positive integer. FIG. 7(b) shows a recording state on the disc along with an exemplified format in case where the recording is continuously performed from a data segment address N to a data segment address (N+1) successive to an unrecorded field.

If data segments are continuously recorded thereon, the DC level correction processing need not always be performed. This means that, basically, there is no problem if the DC level correction is carried out at every one of the heads of continuous data segments, and also means that, in general cases, the DC level correction is preferably carried out only on the data segment in the head field thereof where an unrecorded state shifts to a recorded state. This is because, in a field subjected to the continuous recording, the DC level correction occasionally involves a waveform deformation in the VFQ field which is used for pull-in of the PLL, to thereby degrade the SN ratio.

Though not shown in the drawings, an exception is a case of sequential recording by overwriting for successive writing of data on the basis of block by block of the ECC block (or segment by segment of the data segment in the physical image of the HD DVD). In this exception, if the recording state is poor such that a variation in the DC level exists in the VFO field, which is the head part of a successively written field, the DC level correction is preferably carried out always at the head of the every data field. That is, the head part of the VFQ field to be overwritten causes an edge phase to shift by 4T due to random bit shift in relation to the VFO data which is recorded previously. Or, there remains a possibility that the DC level varies due to the reason that a previously recorded VFO field is erased due to an overwrite characteristic. For use as a storage device in a personal computer, random data recording is a prerequisite. In this case, the DC level correction is preferably performed always at the head of every data segment. If it is determined that there is no influence on the reproduction, such as influence on pull-in of the PLL due to deterioration of the SN ratio, a configuration may be adopted wherein the DC- level correction is always performed at the head of the every data field.

FIGS. 8 and 9 show cases of a recordable DVD (FIGS. 8) and an HD DVD-R/RW (FIGS. 9). FIGS. 8(a) and 9(a) each show a state of the RF signal as an envelope when no DC level correction is carried out. FIGS. 8(b) and 9(b) each show a state of the RF signal also as an envelope when a DC level correction is carried out. If the DC level correction is carried out at the head of a data segment, signal detection can be carried out accurately at the head of the recorded data which is successive to an unrecorded field and in a data head field created by successive writing, as shown in FIGS. 8(b) and 9(b). In the case of a DVD format shown in FIG. 8, the effect is reduced by half because no VFO field is included unlike the case of HDDVD shown in FIG. 9. However, this is still more effective than in the method of recording one ECC block as a dummy to avoid the adverse influence by the conventional simple alternating-current coupling. Depending on adjustment of the time constant for clamping, it may be used for the range in which the ECC correction is possible. Though the term "data head field" is used above, a data field generally follows a VFO field in the case of an HD DVD., and therefore should not be referred to as a data head field in a strict meaning of the term. In the present specification, however, descriptions are made based on a broader interpretation of the term which includes the VFO field That is, for an HD DVD, the VFO field itself is interpreted as a preamble function for the PLL, as well as an effective recorded data field.

. In the examples described above, specific exemplified configurations of the RF-signal processing section have been described. Basically, the configurations are arranged as follows. That is, a signal to be subjected to the DC level correction is converted into a specific RF signal waveform having a predetermined frequency characteristic by a waveform equalizer not shown, which is provided at the successive stage of the RF-signal processing section 113. The converted signal is then delivered to binarizing means through an AGC circuit, etc. As a matter of course, where determined from the flow of the signal, an amplitude matching can be performed by the AGC circuit before performing the DC level correction of the RF signal However, this is often of a design matter, e.g., if the dynamic range allows. Therefore, the amplitude matching is preferably performed after the correction. It is to be noted however that since the DC level correction may be performed even in the configuration wherein the time constant adjustment of the AGC circuit itself is switched, the order of functions as a flow of the RF signal processing including the waveform equalizer is not limited to a particular order.

The waveform equalizer may be, for example, a 7 tap transversal filter which has half-fixed tap coefficients (C0, C1, ... C6) or may have a configuration which adaptively varies the tap coefficients so as to improve the resolution of a read signal which has been lowered. The binarizing means may be a comparator circuit of a DC follow-up type which is adopted in DVD or a Viterbi detector suitable for high-density reproduction.

The above embodiment describes an example in which an intermediate value is output from the clamp circuit 129 by using a positive/negative-side peak detection. However, a read signal may be smoothed by using a smoothing circuit, to output an intermediate value. The intermediate value can be used as a reference potential to clamp the read signal. Thus, whether a reference potential is forcibly set or output from the RF signal itself is not an essential problem. Both configurations can be adopted as concrete configurations.

In the above description, several types of the DC-level correction circuit have been descried. Adverse influence caused by the head data field where an unrecorded state shifts to a recorded state may be reduced in a larger degree by cascading a plurality of circuits which have the function same as that of the DC-level correction circuit, whereby the RF signal may be stabled. For example, a circuit which performs the DC level correction on the basis of positive- and negative-side peak signals, and an AGC circuit which has a high speed time constant and corrects the amplitude to perform the DC level correction may be cascaded, to thereby suppress a variation in the DC level with a higher degree. In particular, it is considered here that the RF signal which is obtained by subjecting outputs from the I-V amplifiers to the alternating-current coupling may cause a variation in the DC level due to the aging and temperature change, and consequently, a disc drive may not maintain the same performance as that at the time of shipment thereof In this case, a highly accurate DC level correction can be achieved by combining a plurality of DC-level correction circuits.

Next, a second embodiment of the present invention will now be described. As for AN HD DVD-RW, there is a case that a track including an SCM is used in the SCM (Servo Calibration Mark) field at each boundary between respective zones, as has been described with respect to the problems in the conventional technique with reference to FIG. 13. In this case, the influence by a variation in the DC level which is caused by the alternating-current coupling is observed so conspicuously that accurate reproduction of information is impossible. In consideration of this case, a signal reproduction method according to the second embodiment is configured to perform the DC level correction on the RF signal subjected to the alternating-current coupling. The DC-level correction is performed when information patterns are reproduced from an optical disc storing information while avoiding the SCM fields, the optical disc being such that the SCM fields each are provided on the optical disc so as to interrupt a wobbled groove by a predetermined length along a track direction. Since the SCMs each are formed in synchrony with the wobble, an accurate position can be identified from the wobble signal. Accordingly, local variations of the RF signal envelope can be suppressed and accurate reproduction of information can be achieved, by using the DC level correction method. Therefore, if information patterns are recorded while avoiding the SCMs, fields where information patterns can be stably reproduced are increased so that the track fields including the SCMs can be used for a servo tracking as well as for a test recording. In particular, recording power adjustment and recording strategy adjustment in the radial direction of the disc are essential to a high-density optical disc, whereby the present invention achieves the remarkable advantage of attaining a highly reliable optical disc drive and reducing the time length for a device adjustment.

As has been described above, the signal reproduction method for an optical disc and the optical disc drive according to the present invention are capable of detecting an information read signal without an error at the head of the data field where the unrecorded state shifts to the recorded state. Therefore, there is provided a means capable of reproducing data at a higher speed with a higher reliability with respect to the format with which the recording has been performed by random access. Thus, an optical disc system which scarcely hinders enlargement of the capacity of an optical disc can be realized with a simple structure.

In case of an HD DVD format, a reproduction clock can be extracted at a higher speed by a clock extraction circuit from a signal of VFO fields other than the VFO fields which are subjected to the DC level correction. Therefore, high-speed stable clock extraction and clock synchronization can be achieved. The above embodiments have been described mainly referring to the HD DVD-RW as examples. However, the present invention is naturally applicable to an optical disc system using a read-only disc and can therefore contribute to enlargement of a variety types of optical discs such as magneto-optical discs having different recording formats.

The present invention has been described above based on preferred embodiments.

The signal reproduction method for an optical disc and the optical disc drive according to the present invention can be used to reproduce signals from a variety of optical discs which have wobbled grooves.

## Claims

1. A signal reproduction method for reproducing information data from an optical disc having location information configured by a wobbled groove, comprising the steps of:
generating a synchronization signal from a wobble read signal read from the optical disc;
performing a DC level correction on an information read signal read from a vicinity of a head of a recorded data field which is successive to an unrecorded data field, by using a timing of the synchronization signal, upon reproducing data from the recorded data field; and
binarizing and reproducing the information read signal that is subjected to the DC level correction.

2. The signal reproduction method of an optical disc according to claim 1, wherein the step of generating the synchronization signal includes the steps of: generating a wobble clock, and decoding wobble information in synchrony with the wobble clock.

3. The signal reproduction method of an optical disc according to claim 1, wherein the step of performing the DC level correction performs the DC level correction also on a information read signal read from a vicinity of a head of another recorded data field which is successive to a recorded data field.

4. An optical disc drive for reproducing information data from an optical disc which has location information configured by a wobbled groove and includes a recorded data field successive to an unrecorded data field, comprising:
means (116, 117) for generating a synchronization signal from a wobble read signal read from the optical disc;
means (126, 126A, 126B) for performing a DC level correction on an information read signal read from a vicinity of a head of at least the recorded data field, by using a timing of the synchronization signal; and
means (113) for binarizing and reproducing the information read signal that is subjected to the DC level correction.

5. The optical disc drive according to claim 4, wherein the means (116, 117) for generating the synchronization signal includes means (116) for generating a wobble clock, and means (117) for decoding wobble information in synchrony with the wobble clock.

6. The optical disc drive according to claim 4, wherein:
the means (126,126A, 126B) for performing the DC level correction performs the DC level correction on an information read signal read also from a vicinity of a head of a recorded data field which is successive to a single recorded data field.

7. The optical disc drive according to claim 4, wherein:
the means (126) for performing the DC level correction has a clamp circuit (129) that clamps the information read signal for a predetermined time width.

8. The optical disc drive according to claim 4, wherein:
the means (126A) for performing the DC level correction includes a positive-side peak detection circuit (131) that detects a positive-side peak of the information read signal, a negative-side peak detection circuit (132) that detects a negative-side peak of the information read signal, and an adder (133) that adds together the positive-side peak and the negative-side peak.

9. The optical disc drive according to claim 4, wherein the means for (126B) performing the DC level correction includes a capacitor in which electric charge is stored by the information read signal, and an impedance switching circuit that switches a charge time constant so as to reduce a charge time for the capacitor by a predetermined time width.

## Patentansprüche

1. Signalwiedergabeverfahren zum Wiedergeben von Informationsdaten von einer optischen Platte mit Positionsinformation, die durch eine gewobbelte Nut gebildet ist, mit den Schritten:
Erzeugen eines Synchronisationssignals aus einem Wobbel-Lesesignal, das von der optischen Platte gelesen wird,
Durchführen einer Gleichstrompegelkorrektur an dem Informationslesesignal, das aus der Nähe eines Kopfes eines aufgezeichneten Datenfeldes gelesen wird, das sich an ein unaufgezeichnetes Datenfeld anschließt, durch Anwendung einer Zeitsteuerung des Synchronisationssignals beim Wiedergeben von Daten aus dem aufgezeichneten Datenfeld und
Binarisieren und Wiedergeben des Informationslesesignals, das der Gleichstrompegelkorrektur ausgesetzt wurde.

2. Signalwiedergabeverfahren für eine optische Platte nach Anspruch 1, wobei der Schritt des Erzeugens des Synchronisationssignals die Schritte einschließt: Erzeugen eines Wobbel-Taktes und decodieren von Wobbel-Information in Sychronität zu dem Wobbel-Takt.

3. Signalwiedergabeverfahren für eine optische Platte nach Anspruch 1, wobei der Schritt des Durchführens der Gleichstrompegelkorrektur die Gleichstrompegelkorrektur auch an einem Informationslesesignal durchführt, das in der Nähe eines Kopfes eines weiteren aufgezeichneten Datenfeldes liegt, das sich an das aufgezeichnete Datenfeld anschließt.

4. Optischer Plattentreiber zum Wiedergeben von Informationsdaten von einer optischen Platte mit Positionsinformation, die durch eine gewobbelte Nut gebildet ist und ein aufgezeichnetes Datenfeld anschließend an ein nicht aufgezeichnetes Datenfeld umfasst, mit
Mitteln (116, 117) zum Erzeugen eines Synchronisationssignals aus einem Wobbel-Lesesignal, das von der optischen Platte gelesen wird,
Mitteln (126, 126A, 126B) zum Durchführen einer Gleichstrompegelkorrektur an einem Informationslesesignal, das in der Nähe eines Kopfes von zumindest dem aufgezeichneten Datenfeld gelesen wird, unter Einsatz einer Zeitsteuerung des Synchronisationssignals und
Mitteln (113) zum Binarisieren und zum Wiedergeben des Informationslesesignals, das der Gleichstrompegelkorrektur ausgesetzt wurde.

5. Optischer Plattentreiber nach Anspruch 4, wobei die Mittel (116, 117) zum Erzeugen des Synchronisationsignals Mittel (116) aufweisen zur Erzeugung eines Wobbel-Taktes und Mittel (117) zum Decodieren von Wobbel-Information in Synchronität zu dem Wobbel-Takt.

6. Optischer Plattentreiber nach Anspruch 4, wobei:
die Mittel (126, 126A, 126B) zum Durchführen der Gleichstrompegelkorrektur eine Gleichstrompegelkorrektur an einem Informationslesesignal durchführen, das auch aus der Nähe eines Kopfes eines aufgezeichneten Datenfeldes gelesen wird, das sich an ein einzelnes aufgezeichnetes Datenfeld anschließt.

7. Optischer Plattentreiber nach Anspruch 4, wobei:
die Mittel (126) zum Durchführen der Gleichstrompegelkorrektur eine Klemmschaltung (129) aufweisen, die das Informationslesesignal für eine vorgegebene Zeitspanne klemmen.

8. Optischer Plattentreiber nach Anspruch 4, wobei:
die Mittel (126A) zum Durchführen der Gleichstrompegelkorrektur eine Positivseiten-Spitzendetektorschaltung (131) aufweisen, die eine positiv-seitige Spitze des Informationslesesignals erfasst, eine Negativseiten-Spitzendetektorschaltung (132), die eine negativ-seitige Spitze des Informationslesesignals erfasst, und einen Addierer (133), der die positiv-seitige Spitze und die negativ-seitige Spitze addiert.

9. Optischer Plattentreiber nach Anspruch 4, wobei die Mittel (126B) zum Durchführen der Gleichstrompegelkorrektur einen Kondensator aufweisen, in dem elektrische Ladung durch das Informationslesesignal gespeichert wird, und eine Impendanz-Schaltschaltung, die eine Ladungszeitkonstante schaltet, um die Ladezeit für den Kondensator für eine vorgegebene Zeitspanne zu reduzieren.

## Revendications

1. Procédé de reproduction de signal pour reproduire des données d'informations à partir d'un disque optique comportant des informations d'emplacement configurées par une rainure de vobulation, comprenant les étapes consistant à :
générer un signal de synchronisation à partir d'un signal de lecture de vobulation lu sur le disque optique ;
appliquer une correction de niveau continu à un signal de lecture d'informations lu au voisinage d'une tête d'un champ de données enregistré qui suit un champ de données non enregistré, en utilisant une synchronisation du signal de synchronisation, lors de la reproduction de données à partir du champ de données enregistré ; et
binariser et reproduire le signal de lecture d'informations qui est soumis à la correction de niveau continu.

2. Procédé de reproduction de signal d'un disque optique selon la revendication 1, dans lequel l'étape de génération du signal de synchronisation comprend les étapes consistant à : générer une horloge de vobulation, et décoder des informations de vobulation en synchronisation avec l'horloge de vobulation.

3. Procédé de reproduction de signal d'un disque optique selon la revendication 1, dans lequel l'étape d'exécution de la correction de niveau continu applique la correction de niveau continu également à un signal de lecture d'informations lu au voisinage d'une tête d'un autre champ de données enregistré qui suit un champ de données enregistré.

4. Lecteur de disque optique pour reproduire des données d'informations à partir d'un disque optique qui comporte des informations d'emplacement configurées par une rainure de vobulation et qui comprend un champ de données enregistré qui suit un champ de données non enregistré, comprenant :
des moyens (116, 117) pour générer un signal de synchronisation à partir d'un signal de lecture de vobulation lu sur le disque optique ;
des moyens (126, 126A, 126B) pour appliquer une correction de niveau continu à un signal de lecture d'informations lu au voisinage d'une tête d'au moins le champ de données enregistré, en utilisant une synchronisation du signal de synchronisation ; et
des moyens (113) pour binariser et reproduire le signal de lecture d'informations qui est soumis à la correction de niveau continu.

5. Lecteur de disque optique selon la revendication 4, dans lequel les moyens (116, 117) pour générer le signal de synchronisation comprennent des moyens (116) pour générer une horloge de vobulation, et des moyens (117) pour décoder des informations de vobulation en synchronisation avec l'horloge de vobulation.

6. Lecteur de disque optique selon la revendication 4 dans lequel :
les moyens (126, 126A, 126B) pour effectuer la correction de niveau continu appliquent la correction de niveau continu à un signal de lecture d'informations lu également dans le voisinage d'une tête d'un champ de données enregistré qui suit un champ de données enregistré unique.

7. Lecteur de disque optique selon la revendication 4, dans lequel :
les moyens (126) pour effectuer la correction de niveau continu comportent un circuit d'écrêtage (129) qui écrête le signal de lecture d'informations pendant une période de temps prédéterminée.

8. Lecteur de disque optique selon la revendication 4, dans lequel :
les moyens (126A) pour effectuer la correction de niveau continu comprennent un circuit de détection de pic de côté positif (131) qui détecte un pic de côté positif du signal de lecture d'informations, un circuit de détection de pic de côté négatif (132) qui détecte un pic de côté négatif du signal de lecture d'informations, et un additionneur (133) qui additionne, ensemble, le pic de côté positif et le pic de côté négatif.

9. Lecteur de disque optique selon la revendication 4, dans lequel les moyens (126B) pour effectuer la correction de niveau continu comprennent un condensateur dans lequel une charge électrique est stockée par le signal de lecture d'informations, et un circuit de commutation d'impédance qui commute une constante de temps de charge de manière à réduire un temps de charge pour le condensateur d'une durée prédéterminée.
